(19) **Europäisches Patentamt**

**European Patent Office**

**Office européen des brevets**

(11) **EP 1 100 255 B1**

(12) **EUROPÄISCHE PATENTSCHRIFT**

(45) Veröffentlichungstag und Bekanntmachung des Hinweises auf die Patenterteilung:
**20.12.2006 Patentblatt 2006/51**

(51) Int Cl.:
*H04N 1/60* *(2006.01)*

(21) Anmeldenummer: **00104491.6**

(22) Anmeldetag: **09.03.2000**

(54) **Optimierungsapparat für fotografische Bilddaten**

Apparatus for optimising photographic image data

Appareil pour l'optimisation des données d'image photographique

(84) Benannte Vertragsstaaten:
**CH DE FR GB IT LI**

(30) Priorität: **11.11.1999 DE 19954353**

(43) Veröffentlichungstag der Anmeldung:
**16.05.2001 Patentblatt 2001/20**

(73) Patentinhaber: **Imaging Solutions AG**
**8105 Regensdorf (CH)**

(72) Erfinder:
• **Zolliker, Peter**
**8157 Dielsdorf (CH)**

• **Kraft, Walter**
**8049 Zürich (CH)**

(74) Vertreter: **Schwabe - Sandmair - Marx**
**Patentanwälte**
**P.O. Box 86 02 45**
**81629 München (DE)**

(56) Entgegenhaltungen:
**EP-A- 0 818 920     US-A- 5 481 380**
**US-A- 5 528 339**

**Beschreibung**

Die vorliegende Erfindung betrifft einen Optimierungsapparat für fotografische Bilddaten nach dem Oberbegriff des Anspruches 1. Sie betrifft weiter ein fotografisches Kopiergerät bzw. einen Printer mit einem Optimierungsapparat sowie ein dem Optimierungsapparat entsprechendes Verfahren und ein Programm zur Ausführung des Verfahrens.

Der Begriff "Fotografie", wie er hierin verwendet wird, bezeichnet die (insbesondere dauerhafte) Erfassung durch elektromagnetische Strahlung (insbesondere Licht) erzeugter Bilder durch hierfür geeignete Mittel (z.B. Fotoapparat mit Film, digitale Fotokamera mit CCD-Chip, Filmkamera, Videokamera usw.).

Das Gebiet der vorliegenden Erfindung betrifft die Verarbeitung von fotografischer Bildinformation, die das fotografisch erzeugte Bild darstellt. Die fotografische Bildinformation wird z.B. herkömmlicherweise durch einen Film festgehalten oder gespeichert. Die so gespeicherte fotografische Bildinformation kann dann in digitale fotografische Bilddaten, z.B. mittels eines Scanners, umgewandelt werden. Die fotografische Bildinformation kann aber bereits von Anfang an nur digital erfasst worden sein, z.B. mittels einer Digitalkamera. Sie kann dann z.B. elektronisch abgespeichert sein (CD-ROM, DVD), kann z.B. über ein Netzwerk (z.B. LAN oder Internet) übertragen werden usw.

Die vorliegende Erfindung betrifft die Verarbeitung fotografischer Bilddaten (im Folgenden auch erste Bilddaten genannt), die mittels der Fotografie erstellte Bilder darstellen. Die fotografischen Bilddaten werden mit einer Datenverarbeitung so aufbereitet, dass sie für die Bilddarstellung geeignet sind. Die Bilddarstellung kann dabei z.B. auf einem Monitor, auf (lichtempfindlichen) Fotopapier durch geeignete Belichtung oder mittels eines Druckers oder Printers oder durch ein sonstiges fotografisches Kopiergerät erfolgen. Die Qualität der Darstellung der fotografischen Bilddaten, sei es herkömmlich z.B. auf Fotopapier oder als DIA oder sei es mittels eines Monitors (z.B. LCD-Bildschirm oder Fernsehgerät) oder Druckers, ist jedoch häufig unzufrieden stellend.

Eine wesentliche Ursache für die unzufrieden stellende Qualität liegt in der Erfassung und Speicherung der Bilder bzw. der fotografischen Bildinformation. Ursachen hierfür liegen z.B. in der optischen Erfassung des Bildes durch die Kamera, also z.B. in der Güte des Objektivsystems, in der Bedienung der Kamera durch den Benutzer, also z.B. Fehlbelichtungen, in der Güte des Bilderfassungsmittels, also des Films oder der CCD, in der Ausleuchtung des fotografierten Gegenstandes usw. Insbesondere ergeben sich durch die nicht optimalen Bedingungen bei der Bilderfassung und Speicherung der fotografischen Bildinformation sog. Farbgänge, das heißt eine fest vorgegebener Farbton wird je nach Farbdichte oder Helligkeit unterschiedlich erfasst und gespeichert. Es kommt also zu einer Farbtonverschiebung gegenüber dem eigentlich darzustellenden Farbton. Anders ausgedrückt, die erfassten und gespeicherten Bildinformationen entsprechen hinsichtlich der Farbwerte nicht den Farbwerten des fotografierten Gegenstandes. Wird die fotografische Bildinformation weiter verarbeitet bevor eine Bilddarstellung erfolgt, indem z.B. ein Film durch einen Scanner abgetastet wird, so können hierbei weitere Veränderungen der Farbwerte bewirkt werden.

Fotografische Bilddaten werden herkömmlicherweise aus fotografischer Bildinformation mittels Farbfiltern gewonnen. Dies ist z.B. beim Scanner oder auch bei der digitalen Fotokamera der Fall. Die so gewonnenen Daten beschreiben somit die Intensität verschiedener Farben eines Bildpunktes. Herkömmlicherweise erfolgt die Darstellung durch sogenannte RGB-Bilddaten im sog. RGB-Farbenraum, wobei RGB für Rot, Grün und Blau steht. Jeweils eine Koordinate des Farbenraums ist somit für eine Farbe reserviert, also für Rot, Grün oder Blau.

Die US-5,481,380 A beschreibt ein Verfahren, bei dem erste Bilddaten durch einen Farbscanner bereitgestellt werden und zweite Bilddaten durch ein Spektralphotometer bereitgestellt werden. Weiter wird offenbart, dass die ersten Bilddaten von einem 1. Farbraum in einen 2. Farbraum konvertiert werden. Mit Hilfe eines Komparators werden die konvertierten ersten Bilddaten konvertiert und korrigiert, wobei der Komparator transformierte zweite Bilddaten mit den ersten Bilddaten vergleicht, die im zweiten Farbraum vorliegen.

Die EP-A-0 818 920 beschreibt ein Verfahren, bei dem Daten mit einer niedrigen Auflösung sowohl durch direktes Scannen als auch durch scannen einer Vorlage mit hoher Auflösung und anschließendem Erzeugen einer Version mit niedriger Auflösung erhalten werden können, wobei die Daten mit niedriger Auflösung und die Daten mit hoher Auflösung jeweils in einem anderen Speicher gespeichert werden. Es wird weiter offenbart, dass die Daten mit niedriger Auflösung eines ersten Farbraumes in Daten eines zweiten Farbraumes transformiert werden, wobei solange Korrekturkoeffizienten berechnet werden, bis die Farbwerte akzeptabel sind. Anschließend werden die so ermittelten Korrekturkoeffizienten dazu verwendet, das hochaufgelöste Bild, das in dem anderen Speicher gespeichert ist (bzw. das Bild wird mit einer hohen Auflösung neu eingescannt) zu korrigieren und auszudrucken.

Aufgabe der Erfindung ist es, fotografische Bilddaten, wie z.B. die RGB-Bilddaten zu optimieren. Dies bedeutet, bei der fotografischen Erfassung und/oder der Speicherung und/oder Verarbeitung der fotografischen Bildinformation erfolgte Fehler (insbesondere Farbwertänderungen) sollen möglichst rückgängig gemacht werden.

Vorstehende Aufgabe wird durch die Gegenstände der unabhängigen Ansprüche gelöst. Vorteilhafte Weiterbildungen gehen aus den abhängigen Ansprüchen hervor.

Vorteilhaft wird erfindungsgemäß ein Optimierungsapparat bereitgestellt, der (digitale) fotografische Bilddaten optimiert. Der Optimierungsapparat führt eine Optimierungstransformation durch. Die Optimierungstransformation entspricht einer Kombination von einer ersten Transformation, die die ersten Bilddaten von dem ersten Farbenraum in den zweiten Farbenraum bringt, der oben erläuterten Korrekturtransformation und einer zweiten Transformation, die die im zweiten Farbenraum korrigierten ersten Bilddaten in einen dritten Farbenraum transformiert, der für die Bilddarstellung geeignet ist. Das erfindungsgemäße Verfahren führt ebenfalls eine derartige Optimierungstransformation mit den unten dargestellten Weiterbildungen durch. Das erfindungsgemäße Programm ist insbesondere auf einem Computer oder einer Workstation lauffähig und führt die erfindungsgemäßen Verfahrensschritte aus.

Der Optimierungsapparat umfasst Verteilhaft eine (digitale) Dateneingabeeinrichtung zum Eingeben erster Bilddaten, bei denen es sich um die fotografischen Bilddaten handelt. Die Dateneingabeeinrichtung kann z.B. eine Datenschnittstelle, ein Modem oder ein Scanner sein. Handelt es sich um einen Scanner, so werden die ersten (fotografischen) Bilddaten z.B. durch Abtasten eines Films erfasst, der die zu verarbeitende fotografische Bildinformation darstellt. Alternativ können aber auch die ersten Bilddaten z.B. über ein Netzwerk empfangen werden. Diese ersten Bilddaten liegen in einem ersten Farbenraum vor. Typischerweise handelt es sich um einen Farbenraum, dessen Koordinaten jeweils eine Farbe beschreiben, also z.B. der RGB-Farbenraum. Die ersten Bilddaten stellen ein Bild oder mehrere Bilder dar, die fotografisch erfasst wurden. Nachgeschaltet zu der Dateneingabeeinrichtung ist die erfindungsgemäße Optimierungseinrichtung, in der die ersten Bilddaten optimiert werden. Nachgeschaltet der Optimierungseinrichtung ist dann eine Datenausgabeeinrichtung, um die optimierten ersten Bilddaten, die das Bild oder die Bilder nun optimiert darstellen, auszugeben. Bei der Datenausgabeeinrichtung kann es sich wiederum um eine Datenschnittstelle oder ein Modem handeln. Die Datenschnittstelle ist z.B. mit einem Computer oder fotografischen Kopiergerät verbunden oder mit einem Netzwerk. Die Datenausgabeeinrichtung kann aber auch eine Bildherstellungseinrichtung sein, die basierend auf den Bilddaten ein Bild auf einem Medium herstellt. Beispielsweise kann es sich um einen Drucker handeln, der basierend auf den Bilddaten das optimierte Bild ausdruckt. Der Ausdruck kann z.B. auf normalem Papier oder lichtempfindlichen Papier durch geeignete Drucker oder andere fotografische Kopiergeräte erfolgen. Die optimierten ersten Bilddaten beschreiben somit eine Bildinformation, die durch die Datenausgabeeinrichtung verarbeitet wird. Diese Verarbeitung kann insbesondere eine Anpassung und somit Änderung der optimierten ersten Bilddaten im Hinblick auf das Ausgabegerät umfassen. Je nachdem, ob die Bilddaten für einen Monitor oder einen Drucker bestimmten Typs gedacht sind und je nach Dynamikumfang des Ausgabemediums (Fotopapier, Normalpapier, Monitor) können die optimierten Bilddaten manipuliert und an den Dynamikumfang angepasst werden, um im Hinblick auf das Ausgabemedium den besten Kompromiss zu erzielen. Beispielsweise können die optimierten Bilddaten digital mit einer Maske überlagert werden, die bestimmte Bildbereiche aufhellt oder abdunkelt, um so eine Anpassung an das Ausgabemedium und das subjektive Wahrnehmungsvermögen des Menschen vorzunehmen.

Für eine Optimierung der ersten Bilddaten müssen diese korrigiert werden. Die Erfinder haben herausgefunden, dass es für die Durchführung einer derartigen Korrektur von erheblichem Vorteil ist, wenn sie durch eine Transformation beschrieben wird, die einer Korrektur entspricht, die in einem anderen, für die Korrektur geeigneteren Farbenraum vorgenommen wird. Die zu optimierenden ersten Bilddaten befinden sich in einem bestimmtem Farbenraum vor der Optimierung, der im Folgenden "erster Farbenraum" genannt wird. Die durch die einzelnen ersten Bilddaten beschriebenen Farbwerte im ersten Farbenraum sind durch die Optimierung zu ändern. Diese Änderung wird bevorzugt durch eine Optimierungstransformation durchgeführt. Damit die Optimierungstransformation den Vorteil einer Korrektur in einem dazu geeigneten Farbenraum nutzt, entspricht die Optimierungstransformation vorzugsweise einer Kombination von Transformationen, nämlich einer sogenannten ersten Transformation, der genannten Korrekturtransformation und einer sogenannten zweiten Transformation, die die im Folgenden beschriebenen Eigenschaften aufweisen.

Die erste Transformation transformiert die zu optimierenden ersten Bilddaten von dem ersten Farbenraum in den anderen, zur Korrektur geeigneten, zweiten Farbenraum. Befinden sich die ersten Bilddaten dann in dem zweiten Farbenraum, der sich vom ersten Farbenraum unterscheidet, so wird dort eine Korrekturtransformation durchgeführt, die die ersten Bilddaten innerhalb des zweiten Farbenraums korrigiert. Sind die ersten Bilddaten korrigiert, so werden sie durch eine zweite Transformation in einen dritten Farbenraum transformiert, der sich insbesondere vom zweiten Farbenraum unterscheidet und der für die Bilddarstellung (z.B. fotografisches Kopiergerät, Monitor) geeignet ist. Insbesondere handelt es sich bei dem dritten Farbenraum wiederum um den gleichen Farbenraum wie den ersten Farbenraum oder um einen Standardfarbraum, wie z.B. sRGB oder Lab. Die Transformation in den Standardfarbraum kann aber auch durch einen gesonderten Schritt erfolgen, wie später noch beschrieben wird. Befinden sich aber z.B. die ersten Bilddaten in dem RGB-Farbenraum und soll ein Ausdruck mittels eines Farblaserdruckers erfolgen, der cyan-farbenen, magenta-farbenen, gelben und schwarzen Toner enthält, so kann die Transformation in einen entsprechenden CMYK-Farbenraum ("C" für Cyan, "M" für Magenta, "Y" für Gelb und "K" für Schwarz) erfolgen. Erfolgt die Bilderstellung z.B. durch die Belichtung von Fotopapier mit verschiedenfarbenen Lasern, dreier unterschiedlicher Wellenlängen, so kann die Transformation in einem dritten Farbenraum, dessen Koordinaten die Wellenlängen der drei Laser beschreiben, erfolgen.

Durch die Transformation der für die Bilddarstellung aufzubereitenden Bilddaten in einen für die Korrektur geeigneten Farbraum, kann ein optimales Korrekturergebnis bei geringem Rechenaufwand erzielt werden.

Die Korrekturtransformation im zweiten Farbenraum entspricht vorzugsweise einer Transformation, die eine Drehung und/oder Scherung in diesem zweiten Farbenraum umfasst. Insbesondere durch diese Drehung können Fehler bei der fotografischen Erfassung, insbesondere Fehler in den Farbwerten (z.B. Farbgangfehler), korrigiert werden. Vorzugsweise wird der zweite Farbenraum so gewählt, dass zumindest eine Koordinate die Farbdichte der Farbe beschreibt. Dies hat sich als besonders vorteilhaft für die Durchführung einer Korrektur erwiesen, insbesondere dann, wenn eine Farbdichten-Transformation, insbesondere eine Drehung und/oder Scherung und/oder Verschiebung des Koordinatenursprungs zur Korrektur verwendet wird oder die Farbdichten-Transformation die Korrektur unterstützt. Die Farbdichten-Transformation, insbesondere Drehung oder Scherung, wird vorzugsweise so ausgebildet, dass Bilddaten, die einen Grauwert oder Grauton darstellen, nach der Farbdichten-Transformation näher und/oder dichter an der Achse liegen, die im zweiten Farbraum die Farbdichte beschreibt (siehe auch Fig. 5 von EP 0 586 772 A1 und Beschreibung). Vorteilhaft erfolgt die Bestimmung der Korrekturtransformation insbesondere nicht basierend auf den zu korrigierenden ersten Bilddaten, insbesondere wegen des großen Datenumfangs dieser ersten Bilddaten. Vorteilhaft erfolgt die Bestimmung der Konrrekturtransformation und insbesondere der Drehung basierend auf der Analyse zweiter Bilddaten. Diese zweiten Bilddaten können zwar direkt mit den ersten Bilddaten zusammenhängen (z.B. damit statistisch korrelieren), sie können aber aufgrund ihres sich von den ersten Bilddaten unterscheidenden Informationsgehalts insbesondere nicht in die ersten optimierten Bilddaten transformiert werden. Dies liegt insbesondere an der reduzierten lokalen Auflösung, wie weiter unten noch beschrieben wird.

Bei der Korrekturtransformation wird vorzugsweise nicht einfach nur eine Offsetkorrektur vorgenommen, sondern es erfolgt eine mehrdimensionale Korrektur oder Transformation, insbesondere erfolgt die oben genannte Drehung oder Scherung.

Wie erwähnt, basiert die Korrekturtransformation vorzugsweise auf der Analyse zweiter Bilddaten, die vorzugsweise ebenfalls im zweiten Farbenraum vorliegen. Basierend auf der Analyse, bei der es sich insbesondere um eine statistische Analyse der zweiten Bilddaten handelt, wird dann die Korrektur, insbesondere mehrdimensionale Transformation oder Drehung, im zweiten Farbenraum durchgeführt.

Die zweiten Bilddaten weisen vorzugsweise einen erheblich geringeren Datenumfang auf als die zu korrigierenden ersten Bilddaten, um so den Berechnungsaufwand für die Analyse und die Korrektur zu minimieren. Insbesondere weisen die zweiten Bilddaten eine wesentliche geringere lokale Auflösung auf als die ersten Bilddaten. Vorzugsweise stellen die zweiten Bilddaten das Bild oder die Bilder dar, die auch durch die ersten Bilddaten dargestellt werden. Zumindest stellen sie einen Teil des Bildes oder der Bilder dar. Vorteilhaft besteht also eine (statistische) Korrelation zwischen den zweiten Bilddaten und den ersten Bilddaten. Bei den zweiten Bilddaten kann es sich insbesondere um Bilddaten handelt, die sich als geeignete Grundlage für eine Analyse und Korrektur erwiesen haben. Sie können beständig im Laufe der Betriebszeit des Optimierungsapparats verbessert werden. Insbesondere können unterschiedliche zweite Bilddaten in Abhängigkeit von der Art der zu verarbeitenden ersten Bilddaten, das heißt verwendeter Filmtyp, verwendeter Kameratyp usw., verwendet werden.

Werden die zweiten Bilddaten zumindest teilweise aus derselben fotografischen Bildinformation gewonnen wie die ersten Bilddaten, so kann dies unabhängig von der Gewinnung der ersten Bilddaten erfolgen oder die zweiten Bilddaten können aus den ersten Bilddaten abgeleitet werden. Eine unabhängige Gewinnung der zweiten Bilddaten stellt z.B. die Abtastung eines Bildes (z.B. Film), das den ersten Bilddaten zu Grunde liegt, durch einen gesonderten Scanner dar, der insbesondere eine höhere spektrale (aber niedrigere lokale) Auflösung aufweisen kann als ein Scanner, der für die Gewinnung der ersten Bilddaten verwendet wird.

Werden die zweiten Bilddaten aus den ersten gewonnen, so werden hierzu die ersten Bilddaten in den zweiten Farbenraum transformiert. Außerdem erfolgt vorteilhaft eine Reduktion der lokalen Auflösung, um somit den Datenumfang für die Analyse basierend auf den zweiten Bilddaten zu minimieren.

Vorteilhaft liegt der Datenumfang und/oder die lokale Auflösung der zweiten Bilddaten wenigstens eine Größenordnung unter dem Datenumfang bzw. der lokalen Auflösung der ersten Bilddaten, die basierend auf den zweiten Bilddaten korrigiert werden, noch mehr bevorzugt wird ein wenigstens um zwei Größenordnungen geringerer Datenumfang bzw. geringere lokale Auflösung und besonders bevorzugt wird ein um wenigstens drei Größenordnungen geringerer Datenumfang bzw. geringere lokale Auflösung. Eine lokale Auflösung von weniger als 10.000 Bildpunkten pro Bild für die zweiten Bilddaten und insbesondere in der Größenordnung von etwa 1.000 Bildpunkten hat sich als ausreichend erwiesen.

Zur Analyse und Korrektur finden Verfahren Anwendung, die z.B. aus EP 0 586 773 A1 oder US-A-5,365,353 bekannt sind. Dort erfolgt jedoch keine Optimierung für die Bilddarstellung aufzubereitender Daten, sondern die Bestimmung von Steuerdaten zum Ansteuern einer Belichtungseinheit basierend auf Bilddaten. Eine Transformation der Steuerdaten von dem Farbenraum, in dem die Korrektur vorgenommen wird, zu einem anderen für die Bilddarstellung geeigneten Farbenraum findet nicht statt. Die eigentliche Bilddarstellung erfolgt durch Belichtung eines Films auf ein Fotopapier. Insbesondere wird im Gegensatz zur vorliegenden Erfindung die darzustellende (und auf dem Film gespeicherte) Bildinformation nicht in (digitale) Bilddaten umgewandelt oder als digitale Bilddaten eingegeben, die dann der erfindungsgemäßen Optimierungstransformation unterzogen werden.

Weiter werden vorzugsweise im Gegensatz zu dem in den genannten Druckschriften beschriebenen Verfahren nicht diejenigen Daten der Analyse zu Grunde gelegt, die auch korrigiert werden. Vorzugsweise wird ein spezieller Datensatz, nämlich die bereits erwähnten zweiten Bilddaten, erstellt, die dann die Grundlage für die Analyse bilden, wobei das Analyseergebnis dann nicht zur Korrektur der zweiten Bilddaten verwendet wird, sondern zur Korrektur der ersten Bilddaten, die insbesondere in hoher Auflösung vorliegen.

Wie aus EP 0 586 773 A1 oder US-A-5,365,353 bekannt ist, können Korrekturen durchgeführt werden, die auf einer statistischen Analyse eines Satzes von Bildern oder auf einer statistischen Analyse eines Einzelbildes basieren. Der Satz von Bildern wird dabei so ausgewählt, dass sich eine statistische Korrelation zwischen den Bildern z.B. auf Grund des gleichen verwendeten Films oder der gleichen verwendeten Kamera ergibt. Die zweiten Bilddaten beruhen somit in diesem Fall sowohl auf dem gerade zu transformierenden Bild als auch auf einen Satz von Bildern, in dem das gerade zu transformierende Bild eingebunden ist.

Sämtlichen ersten Bilddaten, die ein bestimmtes Bild darstellen, ist somit durch die Korrelation zwischen ersten und zweiten Bilddaten eine bestimmte Korrekturtransformation zugeordnet.

Es können auch mehrere Korrekturtransformationen zur Korrektur erster Bilddaten, die ein einziges Bild darstellen, verwendet werden. Dies kann insbesondere dann von Vorteil sein, wenn das Bild mehrere dominante Flächen aufweist, die stark hinsichtlich Helligkeit und/oder Farbton variieren. In diesem Fall können dann unterschiedliche, für die jeweiligen Bereich des Bildes optimal geeignete Korrekturtransformationen bestimmt und bei der Optimierungstransformation angewendet werden.

Wie bereits oben bemerkt wurde, können durch die fotografische Erfassung und/oder die Abspeicherung der fotografischen Bildinformation ungewünschte Veränderungen der Farbwerte der einzelnen Bildpunkte bewirkt werden. Die Dateneingabeeinrichtung, insbesondere ein Scanner, kann weitere ungewünschte Veränderungen bewirken, insbesondere dann, wenn der Scanner einen sog. Farbgang aufweist. Diese Änderungseigenschaften können für jeden Scanner genau z.B. mittels Farbtafeln vermessen werden. Jedoch ist es erforderlich, dies für sämtliche Farbtöne und Farbdichtesstufen durchzuführen. Als Ergebnis dieser Messungen erhält man ein sogenanntes Profil der Dateneingabeeinrichtung, insbesondere des Scanners, z.B. in Matrizenform oder in Form einer Tabelle. Basierend auf diesem Profil kann dann jeder einzelne Bildpunkt der ersten Bilddaten so korrigiert werden, dass die Veränderungseigenschaften der Dateneingabeeinrichtung ausgeglichen bzw. rückgängig gemacht werden.

Alternativ können die zweiten Bilddaten aus den ersten Bilddaten durch eine Ausgleichstransformation der reduzierten ersten Bilddaten in dem zweiten Farbenraum gewonnen werden. Diese Ausgleichstransformation beruht vorzugsweise auf einer statistischen Analyse reduzierter erster Bilddaten, die eine Vielzahl über die Dateneingabeeinrichtung eingegebener Bilder darstellen und die die Farbwertänderungseigenschaften der Dateneingabeeinrichtung widerspiegeln. Durch die Ausgleichstransformation werden die Farbwertänderungseigenschaften der Dateneingabeeinrichtung zumindest in etwa ausgeglichen. Als Ausgleichstransformation kann z.B. eine Karhunen-Loeve-Transformation verwendet werden. Dient als Dateneingabeeinrichtung ein Scanner, so werden bevorzugt eine Vielfalt unterschiedlicher Filmtypen und Bildtypen abgetastet, um eine Datenbasis für die Analyse zu gewinnen.

Bei als Datenschnittstelle ausgebildeten Dateneingabeeinrichtungen, die die Bilddaten bzw. die Bildinformation nicht verändern, ist die Erstellung eines Profils der Dateneingabeeinrichtung oder die Anwendung einer Ausgleichstransformation nicht erforderlich. Auf Kosten der Qualität der Datenausgabe kann auch bei einem Scanner auf das Profil verzichtet werden.

Hat man auf oben genannte Weise erste Bilddaten erhalten, die frei von Einflüssen der Dateneingabeeinrichtung sind, so werden diese vorteilhaft dann der Optimierungstransformation unterzogen oder die Verarbeitungsvorgänge zur Befreiung der ersten Bilddaten von den Einflüssen werden in die Optimierungstransformation mit eingebracht. Beispielsweise kann die erste Transformation durch die den genannte Ausgleichstransformation realisiert werden. Danach erfolgt sowohl die Transformation von dem ersten Farbenraum in den zweiten Farbenraum als auch die Befreiung der ersten Bilddaten von Einflüssen der Dateneingabevorrichtung. Anschließend an die Optimierungstransformation kann noch eine Transformation in einen Standardfarbraum, wie z.B. sRGB oder Lab erfolgen, der an das menschliche Auge bzw. menschliche Farbempfinden angepasst ist und unabhängig von den Ausgabegeräten ist. Durch diese Transformation in den Standardfarbraum kann ein Dynamikumfang und eine Gradation der transformierten Bilddaten erzielt werden, der bzw. die an ein durchschnittliches Papier angepasst ist. Eine Anpassung des Dynamikumfangs und der Gradation kann anschließend erfolgen. Eine derartige Transformation in den Standardfarbraum wird insbesondere dann durchgeführt, wenn die eingegebenen ersten Bilddaten von einem Film stammen. So ist z.B. der Dynamikumfang des Fotopapiers erheblich geringer als der Dynamikumfang eines Films, mit dem die fotografische Bildinformation erfasst wurde. Insbesondere muss die Gradation des Fotopapiers berücksichtigt werden. Eine Transformation in den Standardfarbraum kann dagegen vielleicht nicht erforderlich sein, wenn die ersten Bilddaten von einer Digitalkamera stammen. Anschließend an die optionale Transformation in den Standardfarbraum kann dann noch eine Anpassung der optimierten und standardisierten ersten Bilddaten an das Ausgabemedium erfolgen. Insbesondere kann eine Anpassung an die Dynamik des Ausgabemediums erfolgen. Entsprechendes, wenn auch in geringerem Umfang, gilt, wenn die Daten auf einen Monitor ausgegeben werden sollen. Die somit für eine bestimmte Ausgabe vorbereiteten Bilddaten können dann direkt zu der Ausgabevorrichtung übertragen werden oder auf einem Speichermedium abgespeichert werden oder über ein Netzwerk (z.B. Internet) zu einem Datenempfänger übertragen werden.

Besonders bevorzugt werden die zweiten Bilddaten so gestaltet, dass sie frei von Einflüssen der Dateneingabevorrichtung sind. Dies gilt besonders, vorzugsweise auch für die durch die erste Transformation transformierten ersten Bilddaten.

Die erste und zweite Transformation kann in Abhängigkeit davon, ob z.B. die zweiten Bilddaten unabhängig von den ersten Bilddaten gewonnen werden, ob sie aus den ersten Bilddaten vor oder nach der Reduktion der Bilddaten und vor oder nach der Anwendung eines Profils gewonnen werden, bestimmt werden. Die verschiedenen Varianten werden im Folgenden anhand eines digitalen Systems und eines Hybridsystems beschrieben.

Bei der Beschreibung der verschiedenen Ausführungsformen werden dabei weitere erfindungswesentliche Merkmale offenbart. Insbesondere können Merkmale der verschiedenen Ausführungsformen miteinander kombiniert werden.

Fig. 1   zeigt ein digitales System gemäß einer ersten Variante;
Fig. 2   zeigt ein digitales System gemäß einer zweiten Variante;
Fig. 3   zeigt ein Hybridsystem;
Fig. 4   zeigt die Bestimmung von Testbilddaten;
Fig. 5   zeigt ein Verfahren zur Verbesserung der Positionsübereinstimmung;

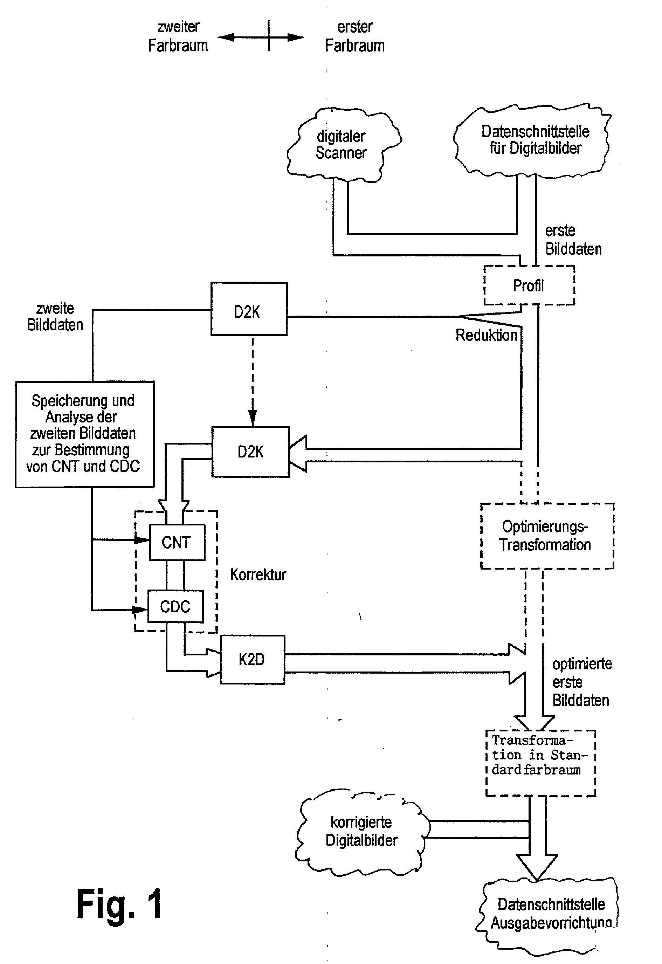

Das in Fig. 1 dargestellte digitale System stellt ein fotografisches Kopiergerät bzw. einen Printer dar, der eingegebene digitale fotografische Bilddaten optimiert und dann auf einer Ausgabevorrichtung ausgibt.

Als Dateneingabeeinrichtung ist ein digitaler Scanner vorgesehen, der z.B. einen Film abtastet. Die durch die Abtastung gewonnenen Bilddaten stellen die ersten Bilddaten dar. Alternativ oder zusätzlich kann auch eine Datenschnittstelle vorgesehen sein, über die unkorrigierte Digitalbilder als erste Bilddaten eingegeben werden.

Die ersten Bilddaten können einem sog. Profil unterzogen werden, um systematische, durch den Eingabevorgang bedingte Fehler zu beseitigen. Um ein Profil zu bestimmen, muss vorher möglichst für den gesamten Farbenraum vermessen werden, inwieweit durch die Dateneingabeeinrichtung Änderungen der Farbwerte der Bildinformation vor und nach der Eingabe bewirkt werden. Das Profil wird so gestaltet, dass diese Änderungen rückgängig gemacht werden. Insbesondere können die Farbwertänderungseigenschaften eines Scanners z.B. mittels normierten Farbtafeln vermessen werden. Zweck des Profils ist es, Bilddaten zu erzeugen, die frei von Einflüssen der Dateneingabeeinrichtung sind.

Bei den ersten Bilddaten handelt es sich typischerweise um hochaufgelöste Bilddaten mit mehr als 1 Mio. Bildpunkten pro Bild. Dies ist in den Figuren durch die breite Linie angedeutet, die den hohen Datenumfang darstellt.

Sind erste Bilddaten nun gegeben, die frei von Einflüssen der Dateneingabeeinrichtung sind, so werden diese über eine Optimierungstransformation in optimierte erste Bilddaten umgewandelt. Die optimierten ersten Bilddaten sind insbesondere insoweit optimiert, dass insbesondere systematische Fehler bei der fotografischen Bilderfassung und Speicherung beseitigt sind. Diese optimierten Bilddaten können dann, falls erforderlich, in den oben erwähnten Standardfarbraum transformiert werden und optimal auch einer Anpassungstransformation unterzogen werden, die eine Anpassung der optimierten Bilddaten an die Ausgabevorrichtung vornimmt. Wie bereits beschrieben, können die Bilddaten z.B. auf einem Fotopapier ausgegeben werden, dessen Gradation zu berücksichtigen ist. Sollen die optimierten ersten Bilddaten über ein Netzwerk oder über Internet zu einem Kunden versendet werden, so kann dies direkt oder nach der optimalen Transformation in den Standardfarbraum ohne weitere Anpassung erfolgen. Auch können Kundenwünsche berücksichtigt werden, indem in das fotografische Kopiergerät oder den Optimierungsapparat der vorliegenden Erfindung Kundeninstruktionen mit eingegeben werden, die die Ausgabevorrichtung spezifizieren, an die die optimierten ersten Bilddaten angepasst werden sollen. Beispielsweise können die Kundeninstruktionen einen bestimmten Farbtintenstrahlertyp und das verwendete Papier spezifizieren. Der Kunde kann somit z.B. über das Internet Digitalbilder zusammen mit den Kundeninstruktionen versenden, diese werden über die Digitalschnittstelle als erste Bilddaten in den Optimierungsapparat eingegeben und dann nach der Optimierung als optimierte erste Bilddaten und/oder standardisierte und/oder angepasste optimierte Bilddaten über Internet wieder an den Kunden zurückgesendet werden. Die eben beschriebene Art der Bildverarbeitung mittels des erfindungsgemäßen Optimierungsapparats ist natürlich nicht auf die Ausführungsform gemäß Fig. 1 beschränkt, sondern gilt für sämtliche Optimierungsapparate gemäß der Erfindung.

Umfasst das in Fig. 1 gezeigte digitale System eine Ausgabevorrichtung zur Bildausbildung auf einem Ausgabemedium, wie dies z.B. bei einem fotografischen Kopiergerät der Fall ist, so können natürlich auch bereits korrigiert Bilddaten, wie z.B. Bilder auf Foto-CDs in den Druckprozess des fotografischen Kopiergeräts integriert werden, wie dies in Fig. 1 unten dargestellt ist, wonach korrigierte Digitalbilder direkt auf die Ausgabevorrichtung gegeben werden können. Sind diese korrigierten Digitalbilder noch nicht standardisiert, so können sie natürlich auch in den in Fig. 1 beschriebenen Datenfluss vor der Standardisierung eingespeist werden, so dass sie in einem Standardfarbraum transformiert werden.

In Fig. 1 ist weiter angedeutet, dass sich Vorgänge auf der linken Hälfte auf den zweiten Farbenraum beziehen und Vorgänge auf der rechten Hälfte auf den ersten Farbenraum. Es ist angenommen, dass sich die ersten Bilddaten vor und nach der Optimierungstransformation im ersten Farbenraum befinden. Wie bereits oben bemerkt, können sich die ersten Bilddaten, die sich vor der Optimierungstransformation im ersten Farbenraum befinden, nach der Optimierungstransformation auch in einem dritten Farbenraum befinden, der sich von dem ersten und/oder zweiten Farbenraum unterscheidet und der für die Ausgabe der optimierten ersten Bilddaten besser geeignet ist.

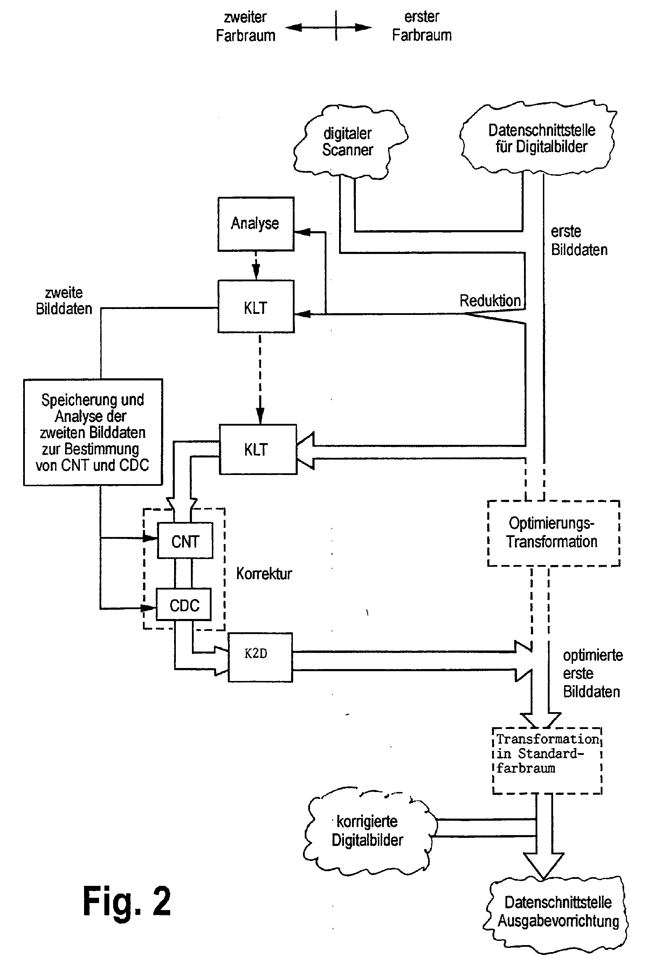

Die Optimierungstransformation entspricht erfindungsgemäß einer Kombination mehrerer Transformationen, nämlich insbesondere die erste Transformation, die Korrekturtransformation und die zweite Transformation. Wie bereits oben erwähnt kann eine Transformation zur Befreiung der Bilddaten von Einflüssen der Dateneingabeeinrichtung in die Optimierungstransformation eingebunden sein, wie dies weiter unten im Zusammenhang mit Fig. 2 noch erläutert wird. Die Transformationen können nacheinander durchgeführt werden. Es kann aber auch aus diesen Transformationen eine einzige Transformation, nämlich die Optimierungstransformation gebildet werden. Diese Optimierungstransformation kann, wie durch die gestrichelte Linie angedeutet ist, direkt auf die ersten Bilddaten angewendet werden. Sie entspricht der Kombination der genannten Transformationen.

Eine erste Transformation D2K führt die ersten Bilddaten, die bevorzugt frei von Einflüssen der Dateneingabeeinrichtung sind, in den zweiten Farbenraum über. Sollten die ersten Bilddaten noch nicht frei von Einflüssen der Dateneingabeeinrichtung sein, so können diese Einflüsse auch im Rahmen der im Folgenden beschriebenen Korrektur minimiert oder ausgeglichen werden.

Bei dem ersten Farbenraum handelt es sich typischerweise um einen RGB-Farbenraum, in dem jeweils eine Farbe einer Koordinatenachse zugewiesen ist. Bei dem zweiten Farbenraum handelt es sich vorzugsweise um einen Raum, bei dem eine Achse der Farbdichte zugewiesen ist und die anderen beiden Achsen eine Ebene aufspannen, die die Farbe beschreibt.

Die sich nun im zweiten Farbenraum befindlichen ersten Bilddaten werden dann einer Farbnormalisierung (CNT) unterzogen. Hierzu sind die in den Farbraum transformierten ersten Bilddaten besonders vorzugsweise frei von Einflüssen der Dateneingabeeinrichtung. Durch die Farbnormalisierung werden die Daten so transformiert, dass sie unabhängig von Fehlern bei der Bilderfassung sind, die für einen ganzen Satz von Bildern gelten, oder dass zumindest derartige Fehler minimiert sind. Ist z.B. ein Satz von Bildern mit dem gleichen Film aufgenommen, so werden die Daten in einem filmunabhängigen Farbenraum transformiert. Wurde z.B. ein Satz von Bildern mit der gleichen Digitalkamera aufgenommen, so werden sie in einen digitalkamera-unabhängigen Farbenraum transformiert, der von dem Typ der Digitalkamera unabhängig ist.

Während die CNT auf der Analyse eines Satzes von Bildern basiert, wird darauf folgend eine weitere Transformation (CDC) angewendet, die auf einer Analyse des aktuell zu verarbeitenden Bildes basiert. Dabei wird vorzugsweise ein Merkmalsextraktionsverfahren und eine Klassifizierungsstrategie verwendet, um die beste Farb- und Dichtekorrektur für jedes einzelne Bild zu schätzen.

Eine Kombination aus CNT und CDC bildet die Korrekturtransformation. Ein wesentliches Merkmal der Korrekturtransformation ist, dass sie mehrdimensional ist. Insbesondere findet nicht nur die Anwendung eines Offsets oder eine Skalierung statt. Insbesondere bewirkt die Korrekturtransformation zumindest die erwähnte Farbdichten-Transformation, insbesondere eine Drehung und/oder Scherung im zweiten Farbenraum. Gerade durch diese Farbdichten-Transformation können ungewünschte Farbgänge bei der fotografischen Bilderfassung und/oder Speicherung und/oder Dateneingabe ausgeglichen werden.

Nach Durchführung der Korrekturtransformation werden die korrigierten ersten Bilddaten bei dem Beispiel der Fig. 1 wieder in den ersten Farbenraum durch K2D zurück transformiert, bei dem es sich insbesondere um einen RGB-Farbenraum handeln kann.

Die Transformationen D2K und K2D sind vorzugsweise fest vorgegebenen Transformationen, die eine Transformation von einem fest vorgegebenen ersten Farbenraum zu einem fest vorgegebenen zweiten Farbenraum und von dort zurück zu dem ersten Farbenraum oder zu einem fest vorgegebenen Farbenraum durchführen. Zur Bestimmung der Transformation D2K wird vorzugsweise ein repräsentativer Bilddatensatz im zweiten Farbenraum und ein dieser entsprechender Bilddatensatz im ersten Farbenraum gebildet. Die beiden Bilddatensätze werden als erste und zweite Testbilddaten bezeichnet. Sie stellen bevorzugt die gleichen Bilder dar. Die Transformation D2K wird bevorzugt so gestaltet, dass nach der Transformation die ersten Testbilddaten mit den zweiten Testbilddaten übereinstimmen, wenn sie das gleiche Bild darstellen. Dieses Anspassungsverfahren oder Regressionsverfahren wird weiter unten noch im Zusammenhang mit der Hybridlösung erläutert.

Ein besonderer Aspekt der vorliegenden Erfindung ist, dass die Transformation, die eine Beziehung zwischen den ersten und zweiten Bilddaten herstellt, auch bei der Optimierungstransformation Anwendung findet. Insbesondere wird diese Transformation als erste Transformation verwendet. Die gleiche Transformation D2K, wie sie zur Optimierung der ersten Bilddaten verwendet wird, findet somit vorzugsweise auch Anwendung bei der Gewinnung der zweiten Bilddaten aus den ersten Bilddaten.

Neben der Transformation D2K findet jedoch zur Gewinnung der zweiten Bilddaten eine zusätzliche Manipulation an den Daten statt, so dass sich die zweiten Bilddaten von den ersten Bilddaten unterscheiden, die aus der D2K-Transformation hervorgehen. Vorzugsweise liegt die Manipulation in einer insbesondere verlustbehafteten Reduktion des Datenumfangs. Die zweiten Bilddaten werden zur Bestimmung der Korrekturtransformation analysiert, so dass eine reduzierter Datenumfang den Berechnungsaufwand erheblich minimiert. Die Reduktion findet vorzugsweise vor der Transformation durch D2K statt, so dass der Transformationsaufwand ebenfalls verringert wird. Vorzugsweise werden also die ersten Bilddaten reduziert, z.B. durch Unterabtastung oder Mittelung. Diese reduzierten ersten Bilddaten werden dann der D2K-Transformation unterzogen, aus der dann die zweiten Bilddaten hervorgehen. Die zweiten Bilddaten stellen somit dasselbe Bild wie die ersten Bilddaten dar, jedoch mit einer erheblich verringerten Auflösung. Erfahrungsgemäß hat sich eine Auflösung von 500 bis 5.000 Pixel pro Bild als ausreichend für die zweiten Bilddaten erwiesen, um gute Korrekturergebnisse zu erzielen. Für den Fall, dass ein Satz von zusammengehörigen Bildern, die z.B. von demselben Film stammen, optimiert werden soll, werden vorzugsweise die zweiten Bilddaten gespeichert und/oder jeweils auf Grund neuer hinzukommender zweiter Bilddaten geeignet aktualisiert. In die CNT fließt somit vorzugsweise eine Analyse zweiter Bilddaten ein, die aus einem Satz von Bildern hervorgehen. In die CDC fließt vorzugsweise die Analyse der zweiten Bilddaten ein, die dasselbe Bild darstellen wie die ersten Bilddaten, die durch die Optimierungstransformation zu optimieren sind.

Fig. 2 zeigt wiederum ein digitales System bzw. ein digitales fotografisches Kopiergerät. Es unterscheidet sich in der Verwendung einer Transformation, die als KLT bezeichnet wird und die auf einer Analyse, insbesondere statistischen Analyse der zu transformierenden Daten basiert. Auf Grund dieser Analyse ist es möglich, die KLT so zu gestalten, dass Farbwertänderungseigenschaften des Dateneingabegerätes beseitigt bzw. ausgeglichen werden. Infolgedessen ist auch die Anwendung eines Profils nicht erforderlich. Ein Beispiel für eine derartige Transformation ist die Karhunen-Loève-Transformation, die z.B. in EP 0 475 897 A1 oder in "Fundamentals of Digital Image Processing" von Anil K. Jain, Prentice Hall, 1989, beschrieben ist. Auch in dem in Fig. 2 beschriebenen Fall unterscheiden sich die zweiten Bilddaten von den ersten Bilddaten, die der KLT unterzogen wurden. Zur Gewinnung der zweiten Bilddaten werden die ersten Bilddaten zuerst reduziert (z.B. unterabgetastet oder gemittelt). Die sich hieraus ergebenden Daten dienen als Grundlage für die Analyse zur Bestimmung der KLT. Ist die KLT bestimmt, so werden die reduzierten ersten Bilddaten durch die KLT in den zweiten Farbenraum transformiert und stellen dort die zweiten Bilddaten dar. Dieselbe KLT, die zur Gewinnung der zweiten Bilddaten eingesetzt wird, wird im Fall der Fig. 1, auch für die Optimierungstransformation verwendet, wie in Fig. 2 zu sehen ist. Entsprechend zur Ausführungsform der Fig. 1 dienen auch bei der Ausführungsform der Fig. 2 die zweiten Bilddaten als Grundlage für die Analyse zur Bestimmung der Korrekturtransformation. Die Rücktransformation in den ersten Farbenraum erfolgt durch die aus Fig. 1 bekannte Transformation K2D. Würde man statt dessen die zu der Transformation KLT inverse Transformation $KLT^{-1}$ verwenden, würde man die Einflüsse der Dateneingabeeinrichtung wieder zur Geltung bringen. Dies ist im allgemeinen unerwünscht. Die Transformation $KLT^{-1}$ kann jedoch für die Rücktransformation verwendet werden, wenn die Einflüsse gewünscht sein sollten oder vernachlässigbar sind.

Die Optimierungstransformation OT fasst somit alle Transformationen zusammen, die in den Prozess eingebunden sind. Sie betrifft die hochaufgelösten fotografischen Bilddaten, also die ersten Bilddaten und wird durch folgende Gleichung (1) für das in Fig. 1 beschriebene System und durch die folgende Gleichung (2) für das in Fig. 2 gezeigte System beschrieben:

$$OT = K2D \circ CDC \circ CNT \circ D2K \qquad (1)$$

$$OT = K2D \circ CDC \circ CNT \circ KLT \qquad (2)$$

Die Kombination der Transformationen CDC und CNT stellt ein Beispiel für eine Korrekturtransformation dar. Bei Gleichung (2) eliminiert OT eventuelle Farbänderungseigenschaften, erfüllt also zusätzlich auch die Aufgabe eines Profils. Bei Gleichung (1) muss OT diese Aufgabe nicht erfüllen, da gemäß Figur 1 bereits vor OT ein Profil angewendet wurde.

Sollen die optimierten ersten Bilddaten von einer Ausgabevorrichtung auf einem Papier ausgegeben werden und beruhen die ersten Bilddaten auf der Abtastung eines Films durch einen digitalen Scanner, so wird bevorzugt eine nichtlineare Transformation von der Filmdichte zu einer idealisierten Papierdichte angewendet, die die Charakteristik eines mittleren Papiers enthält. Falls die Daten zu einer spezifischen Ausgabevorrichtung gesendet werden, kann das korrekte Druckprofil angewendet werden.

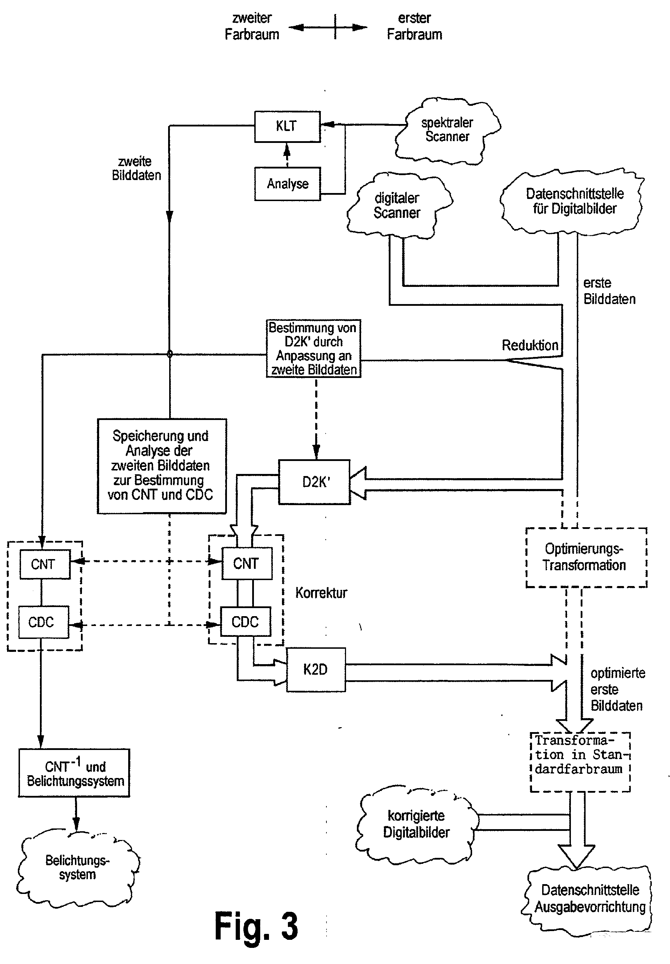

Im Folgenden wird an Hand der Fig. 3 der erfindungsgemäße Optimierungsapparat im Rahmen eines fotografischen Kopiergeräts beschrieben, das als sog. Hybridsystem ausgebildet ist. Ein Hybridsystem besteht aus einem herkömmlichen Drucker für Serviceprints, bei dem Filmvorlagen auf Fotopapier aufbelichtet werden, sowie einem digitalen System, um Bilddaten rein digital zu verarbeiten und insbesondere Indexprints zu erzeugen und digitale Bilddaten zur Speicherung auf einem Datenträger oder zur Übertragung über Netzwerke zu erzeugen, die dieselben Bilder darstellen wie die Serviceprints oder Indexprints. Indexprints stellen auf einem Papierblatt mehrere Bilder dar, jedoch mit einer geringeren Auflösung als die Serviceprints. Im Gegensatz zu den beiden oben beschriebenen digitalen Systemen wird bei dem Hybridsystem der Film nicht nur abgetastet, sondern er kann auch noch für den eigentlichen fotografischen Kopierprozess im Rahmen eines Belichtungssystems verwendet werden.

Im Gegensatz zum digitalen System werden weiter zwei Scanner, ein digitaler Scanner und vorzugsweise ein sog. spektraler Scanner eingesetzt. Bei dem digitalen Scanner handelt es sich wie im digitalen Fall üblicherweise um einen Scanner, der einen CCD-Sensor mit nur drei Farbkanälen pro Pixel (RGB) verwendet, aber eine hohe lokale Auflösung von insbesondere mindestens etwa 100.000 Pixel pro Bild (z.B. für Indexprint), typische 1 Mio. bis 10 Mio. pro Bild aufweist. Der spektrale Scanner weist bevorzugt eine größere Anzahl von Farbkanälen auf, bevorzugt über 10, typischerweise z.B. 35. Der spektrale Scanner erfasst somit den Farbwert eines Bildpunktes genauer als der digitale Scanner. Im Gegensatz zum digitalen Scanner weist er jedoch bevorzugt eine erheblich geringere lokale Auflösung auf.

Unterscheiden sich die Farbkanäle des spektralen Scanners vom digitalen Scanner, wie oben ausgeführt wurde, so liefert der spektrale Scanner Farbdaten, die sich im Gegensatz zu dem in Fig. 3 gezeigten einfachen Beispiel nicht in demselben ersten Farbenraum befinden, wie die ersten Bilddaten, die aus dem digitalen Scanner hervorgehen.

Die aus dem oben erwähnten spektralen Scanner, insbesondere mit hoher spektraler und niedriger lokaler Auflösung gewonnenen Daten, haben sich als ein geeigneter Ausgangspunkt für die Bestimmung einer Korrekturtransformation erwiesen. Hierzu werden die von dem spektralen Scanner gewonnenen Bilddaten analysiert, insbesondere statistisch analysiert. Die Analyse basiert bevorzugt auf einer Vielzahl unterschiedlicher Filmtypen und Bildtypen, um eine Datenbasis zu erhalten, die die Einflüsse des spektralen Scanners wiederspiegelt. Basierend auf der Analyse wird eine Transformation bestimmt, die die Bilddaten des spektralen Scanners in den zweiten Farbenraum transformiert, in dem sie dann als zweite Bilddaten verwendet werden, die unabhängig von Einflüssen des spektralen Scanners sind. Als Transformation wird vorzugsweise die bereits oben erwähnte Karhunen-Loeve-Transformation eingesetzt. Erfindungsgemäß wird ein Bild, das durch den spektralen Scanner abgetastet wurde, ebenfalls durch einen digitalen Scanner abgetastet. Die Gewinnung der ersten Bilddaten ist somit unabhängig von der Gewinnung der zweiten Bilddaten, aber sowohl die ersten Bilddaten als auch die zweiten Bilddaten beruhen auf demselben Bild oder zumindest teilweise auf den selben Bildern eines Satzes von Bildern.

Die zweiten Bilddaten werden, wie z.B. in EP 0 586 773 und US-A-5,365, 353 beschrieben, analysiert und das Analyseergebnis wird zur Bestimmung der bereits oben beschriebenen Korrekturtransformation (CNT, CDC) verwendet. Die so bestimmte Korrekturtransformation wird dann auf die zweiten Bilddaten angewendet. Die somit korrigierten zweiten Bilddaten werden durch eine weitere in EP 0 586 773 und US-A-5,365,353 beschriebenen Transformation in Steuerdaten für die Aufbelichtung des Films auf ein Fotopapier in einem Belichtungssystem umgewandelt.

Erfindungsgemäß werden die zweiten Bilddaten aber nicht nur zur Belichtungssteuerung verwendet, sondern ebenfalls zur Bestimmung der Optimierungstransformation, die die ersten Bilddaten optimiert, eingesetzt.

Die zweiten Bilddaten dienen insbesondere dazu, die erste Transformation zu bestimmen. Hierzu werden die ersten Bilddaten reduziert, z.B. durch Unterabtastung oder Mittelung. Dann wird eine Transformation bestimmt, die die reduzierten ersten Bilddaten so transformiert, dass sie nach der Transformation mit den zweiten Bilddaten (möglichst gut) übereinstimmen. Zur Bestimmung dieser Transformation wird ein herkömmliches Regressionsverfahren oder Anpassungsverfahren verwendet, das weiter unten noch detaillierter beschrieben wird. Die so bestimmte Transformation, die die reduzierten ersten Bilddaten in die zweiten Bilddaten transformiert, wird als D2K' bezeichnet. Die so bestimmte Transformation D2K' wird bei der Optimierungstransformation als erste Transformation eingesetzt und transformiert die ersten Bilddaten in den zweiten Farbenraum. Die durch D2K' transformierten ersten Bilddaten sind unabhängig von der Dateneingabevorrichtung, da dies auch für die zweiten Bilddaten gilt. Die Anwendung eines Profils ist somit nicht erforderlich. Einflüsse der Dateneingabeeinrichtung (digitaler Scanner) werden durch die Transformation D2K' minimiert oder beseitigt.

Die Korrekturtransformation als Bestandteil der Optimierungstransformation wird, wie bereits in Fig. 1 und Fig. 2 beschrieben, aus den zweiten Bilddaten gewonnen. Die durch die Korrekturtransformation korrigierten ersten Bilddaten werden dann mittels der aus Fig. 1 bekannten Transformation K2D wieder in den ersten Farbenraum zurück transformiert und vollenden somit die Optimierungstransformation.

Die übrigen in Fig. 3 zu sehenden Bestandteile wurden bereits im Zusammenhang mit Fig. 1 und Fig. 2 beschrieben, so dass eine nähere Beschreibung weggelassen wird.

Die Optimierungstransformation OT des Hybridsystems kann man durch die folgende Gleichung beschreiben:

$$OT = K2D \circ CDC \circ CNT \circ D2K'$$

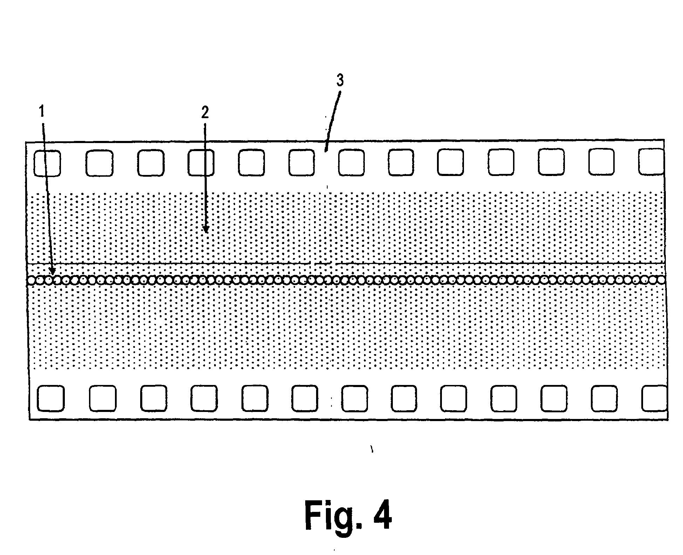

Die Bestimmung der die Transformation D2K' beschreibenden Matrix durch Anpassung der in verschiedenen Farbenräumen reduzierten ersten Bilddaten und zweiten Bilddaten wird im Folgenden anhand der Fig. 4 beschrieben. Die Anpassung erfolgt vorzugsweise so, dass aus den ersten Bilddaten erste Testbilddaten und aus den zweiten Bilddaten zweite Testbilddaten herausgegriffen werden. Fig. 4 zeigt hierfür ein Beispiel. Ein Film 3 wird mittels des spektralen Scanners und des digitalen Scanners abgetastet. Die Messpunkte des digitalen Scanners sind durch Punkte 2 angedeutet. Der spektrale Scanner hat eine grobe räumliche Auflösung, die durch kleine Kreise angedeutet ist. Von den dadurch gewonnenen zweiten Bilddaten werden als zweite Testbilddaten diejenigen Daten ausgewählt, die vorzugsweise in etwa in der Mitte des Films liegen und durch Kreise 1 in Fig. 4 angedeutet sind. Einem Kreis 1 sind somit eine Vielzahl von ersten Bilddaten 2 zugeordnet, die aus demselben Filmbereich stammen. Es hat sich als ausreichend erwiesen, wenn die Anzahl der zweiten Testbilddaten (Kreise in Fig. 4) zwischen zwei und vier Größenordnungen, bevorzugt bei etwa drei Größenordnungen (etwa 1000) liegt. Bevorzugt werden die zweiten Testbilddaten zumindest aus einem Teil der Bilder des Satzes von Bildern bzw. des Films gewonnen. Die in Fig. 4 gezeigten, aneinandergereihten Kreise können sich somit über den gesamten Film erstrecken. Die Bereiche an denen zweite Testbilddaten gewonnen werden, also die in Fig. 4 gezeigten Kreise, werden im Folgenden als Orte bezeichnet.

Die zweiten Testbilddaten werden im zweiten Farbenraum durch die Koordinaten $klt_0$, $klt_1$, $klt_2$ beschrieben. Jedes Testbilddatum ist einem bestimmten Ort i zugeordnet, dem wiederum eine Anzahl von ersten Testbilddaten zugeordnet ist, die durch die Koordinaten $(rgb_0, rgb_1, rgb_2)$ beschrieben werden.

Auf die oben genannte Weise werden für jeden Ort i Testvektoren vi wie folgt gebildet:

$$v_i = (klt_0, klt_1, klt_2, rgb_0, rgb_1, rgb_2, 1)$$

In der oben genannten Gleichung stellt "rgb" jeweils die Mittelung über alle ersten Bilddaten in dem Ort i dar, der z.B. durch einen in Fig. 4 gezeigten Kreis definiert ist. Handelt es sich bei KLT um eine Karhunen-Loeve-Transformation, so beschreiben $klt_0$, $klt_1$, $klt_2$ die ersten drei Koeffizienten der mittels der Karhunen-Loève-Transformation transformierten Daten, die von dem spektralen Scanner ausgegeben wurden.

Wurden in der oben genannten Weise die Testvektoren für alle Orte i bestimmt, so werden dann bevorzugt noch Gewichte für die einzelnen Vektoren berechnet. Ein Gewicht w kann beispielsweise wie folgt berechnet werden:

$$w = 1/sig^2$$

Darin bezeichnet "sig" die Standardabweichung der rgb-Koordinaten eines Bilddatums von den über alle Bilddaten gemittelten Koordinaten $rgb_0$, $rgb_1$, $rgb_2$ am Ort i.

In einem nächsten Schritt wird die Korrelationsmatrix akkumuliert. Diese hat eine Dimension von 7*7. Die Korrelationsmatrix CM berechnet sich wie folgt:

$$CM = \Sigma\, w_i * v_i * v_i^T$$

Die Summierung erfolgt für alle Testorte, bevorzugt entlang der in Fig. 4 gezeigten Linie der Filmmitte. Die Multiplikation $v_i * v_i^T$ ergibt eine Matirx.

In einem nächsten Schritt wird dann D2K' und K2D' berechnet. Die diesen Transformationen entsprechenden Matrizen können aus CM gewonnen werden, indem Untermatrizen extrahiert werden. Zur Gewinnung von $klt_j$ (j = 0, 1, 2) als eine Funktion der rgb-Werte, wird folgende Gleichung verwendet:

$$klt_j = D2K'_{j0} * rgb_0 + D2K'_{j1} * rgb_1 + D2K'_{j2} * rgb_2 + D2K'_{j3}$$

Eine Untermatrix $CM_{KLTj}$ mit einer Dimension von 5*5 wird aus den Zeilen und Spalten j, 3, 4, 5, 6 von CM gewonnen. Diese Matrix wird invertiert, um $IM_{KLTj}$ zu gewinnen:

$$IM_{KLTj} = CM_{KLTj}^{-1}$$

Hieraus ergeben sich dann die Komponenten der Matrix D2K' wie folgt:

$$D2K'_{j0} = -IM_{01}/IM_{00}$$

$$D2K'_{j1} = -IM_{02}/IM_{00}$$

$$D2K'_{j2} = -IM_{03}/IM_{00}$$

$$D2K'_{j3} = -IM_{04}/IM_{00}$$

Um $rgb_j$ (j = 0, 1, 2) als eine Funktion von KLT zu berechnen, wird folgende Gleichung verwendet:

$$rgb_j = K2D'_{0j} * klt_0 + K2D'_{1j} * klt_1 + K2D'_{2j} * klt_2 + K2D'_{3j}$$

Danach ist die Untermatrix $CM_{RGBj}$ zu extrahieren, die eine Dimension von 5*5 aufweist, und zwar aus den Spalten und Zeilen j + 4, 1, 2, 3, 6 von CM. Diese Matrix ist zu invertieren:

$$IM_{RGBj} = CM_{RGBj}^{-1}$$

Daraus werden die Komponenten der Matrix K2D' gewonnen:

$$K2D'_{0j} = -IM_{01}/IM_{00}$$

$$K2D'_{1j} = -IM_{02}/IM_{00}$$

$$K2D'_{2j} = -IM_{03}/IM_{00}$$

$$K2D'_{3j} = -IM_{04}/IM_{00}$$

Im Idealfall ergibt das Matrixprodukt D2K' * K2D' die Einheitsmatrix. Dies ist dann der Fall, wenn die zweiten Testbilddaten und die zugeordneten ersten Testbilddaten genau von demselben Ort i stammen und somit eine perfekte örtliche Übereinstimmung gegeben ist, obwohl der Film durch zwei unterschiedliche Scanner abgetastet wird. Eine weitere Bedingung ist, dass eine lineare Beziehung zwischen dem ersten Farbenraum und dem zweiten Farbenraum gegeben ist. In der Realität ergibt das Matrixprodukt ein Maß für die gute örtliche Übereinstimmung oder die positionelle Zuordnung der ersten und zweiten Testbilddaten. Dieses Maß ist mit einem r-Faktor bei der linearen Regression vergleichbar und kann dazu verwendet werden, einen systematischen Positionsoffset bzw. örtlichen Versatz zwischen den beiden Scannern zu bestimmen. Dazu wird am besten die oben dargelegte Berechnung mittels der Testvektoren und der Matrix CM usw. für verschiedene positionelle Offsets durchgeführt und diejenige Matrix D2K' ausgewählt, für die sich basierend auf dem Matrixprodukt D2K' * K2D' die beste Übereinstimmung ergibt.

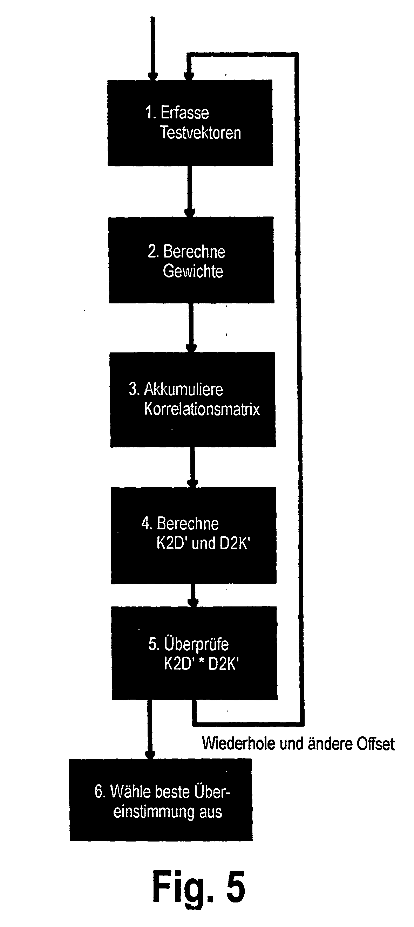

Wie ein derartiges Verfahren durchgeführt werden kann, ist schematisch in Fig. 5 gezeigt. Ist einmal durch Iteration der positionelle Offset bestimmt, so kann dieser als Startwert für die Verarbeitung des nächsten Films verwendet werden.

**Patentansprüche**

1. Optimierungsapparat für fotografische Bilddaten
   mit einer Dateneingabeeinrichtung zum Eingeben erster Bilddaten, die in einem ersten Farbenraum vorliegen und ein fotografisches Bild, einen Satz fotografischer Bilder oder einen Teil davon darstellen,
   einer Optimierungseinrichtung zum Optimieren der ersten Bilddaten und einer Datenausgabeeinrichtung zum Ausgeben der optimierten ersten Bilddaten, die das fotografische Bild oder den Satz fotografischer Bilder optimiert darstellen, wobei
   die Optimierungseinrichtung an den ersten Bilddaten eine Optimierungstransformation durchführt, wobei die Optimierungstransformation einer Kombination aus zumindest den folgenden Transformationen entspricht:

   einer ersten Transformation, die die ersten Bilddaten von dem ersten Farbenraum in einen anderen, zweiten Farbenraum transformiert,
   einer Korrekturtransformation, die die transformierten ersten Bilddaten im zweiten Farbenraum korrigiert, und
   einer zweiten Transformation, die die korrigierten ersten Bilddaten in einen dritten Farbenraum transformiert,

   **gekennzeichnet durch** folgende Merkmale:

   - einer anderen Dateneingabeeinrichtung die zweite Bilddaten, die im zweiten Farbenraum vorliegen, des fotopraphischen Bildes, des Satzes fotografischer Bilddaten oder eines Teils davon unabhängig gewinnt;
   - einer Reduktionseinrichtung, die den Datenumfang der ersten Bilddaten so reduziert, dass sich die lokale Auflösung reduziert,
   - einer Analyse- und Bestimmungseinrichtung, die eine Transformation bestimmt, die die reduzierten ersten Bilddaten von dem ersten Farbenraum in den zweiten Farbenraum zu den zweiten Bilddaten unter Verwendung eines Regressions- oder Anpassungsverfahrens derart transformiert, dass Abweichungen zwischen den reduzierten ersten Bilddaten nach der Transformation und den zweiten Bilddaten minimiert sind, wobei die so bestimmte Transformation die erste Transformation ist.

2. Optimierungsapparat nach Anspruch 1, **dadurch gekennzeichnet, dass** die Korrekturtransformation zumindest eine einer Farbdichten-Transformation im zweiten Farbenraum entsprechende Transformation umfasst, wobei eine Farbdichten-Transformation so gestaltet ist, dass Bilddaten, die einen Grauwert darstellen sollen, einer Farbraumachse, die im zweiten Farbraum die Farbdichte beschreibt, zumindest angenähert wird.

3. Optimierungsapparat nach Anspruch 1 oder 2, **dadurch gekennzeichnet, dass** die Korrekturtransformation auf der Analyse zweiter Bilddaten basiert, die im zweiten Farbenraum vorliegen und die sich von den durch die erste Transformation transformierten ersten Bilddaten unterscheiden.

4. Optimierungsapparat nach Anspruch 3, **dadurch gekennzeichnet, dass** die zweiten Bilddaten ein Bild mit wesentlicher geringerer lokaler Auflösung darstellen als die ersten Bilddaten.

5. Optimierungsapparat nach Anspruch 3 oder 4, **dadurch gekennzeichnet, dass** die zweiten Bilddaten zumindest aus einem Teil des fotografischen Bildes oder des Satzes fotografischer Bilder gewonnen werden, auf dem die ersten Bilddaten basieren.

6. Optimierungsapparat nach Anspruch 3 bis 5, **dadurch gekennzeichnet, dass** die zweiten Bilddaten aus den ersten Bilddaten gewonnen werden, wobei hierzu der Datenumfang der ersten Bilddaten verlustbehaftet reduziert wird und eine Transformation vom ersten Farbenraum zum zweiten Farbenraum erfolgt.

7. Optimierungsapparat nach Anspruch 6, **dadurch gekennzeichnet, dass** die erste Transformation als eine Ausgleichstransformation ausgebildet ist, die reduzierten ersten Bilddaten in den zweiten Farbenraum transformiert, wobei die Ausgleichstransformation auf einer statistischen Analyse reduzierter erster Bilddaten basiert, die die Vielfalt der über die Dateneingabevorrichtung eingegebener Bilder und/oder Sätze von Bildern wiederspiegeln, und wobei die Ausgleichstransformation eine Farbwertänderungseigenschaft der Dateneingabeeinrichtung zumindest in etwa ausgleicht.

8. Optimierungsapparat nach Anspruch 6, **dadurch gekennzeichnet, dass** die ersten Bilddaten im ersten Farbenraum gemäß einer vorgegebenen Zuordnungsvorschrift geändert werden, die auf gemessenen Farbwertänderungseigenschaften der Dateneingabevorrichtung basiert, wobei die Änderung vor der Durchführung einer Reduktion der ersten Bilddaten erfolgt und wobei die geändert und reduzierten Bilddaten durch eine Farbenraumtransformation in den zweiten Farbenraum transformiert werden, wo sie die zweiten Bilddaten darstellen.

9. Optimierungsapparat nach Anspruch 1 bis 8, **dadurch gekennzeichnet, dass** die erste Transformation mittels erster und zweiter Testbilddaten bestimmt wird, wobei die ersten Testbilddaten im ersten Farbenraum vorliegen und die zweiten Testbilddaten im zweiten Farbenraum vorliegen und die erste Transformation so bestimmt wird, dass nach der Transformation der ersten Testbilddaten in den zweiten Farbenraum Abweichungen der transformierten ersten Testbilddaten von den nicht-transformierten zweiten Testbilddaten minimiert sind.

10. Optimierungsapparat nach Anspruch 9, **dadurch gekennzeichnet, dass** die ersten Testbilddaten und die zweiten Testbilddaten zumindest aus einem Teil des fotografischen Bildes oder des Satzes fotografischer Bilder gewonnen werden, das bzw. der durch die ersten Bilddaten dargestellt wird, wobei zur Bestimmung der zweiten Testbilddaten Farbwerte des fotografischen Bildes oder des Satzes fotografischer Bilder statistisch analysiert werden.

11. Optimierungsapparat nach Anspruch 9 oder 10, **dadurch gekennzeichnet, dass** eine erste Rücktransformation zum Transformieren der zweiten Testbilddaten in den ersten Farbenraum so bestimmt wird, dass nach der Rücktransformation der zweiten Testbilddaten in den ersten Farbenraum Abweichungen der transformierten zweiten Testbilddaten von den nicht-transformierten ersten Testbilddaten minimiert sind und dass die Güte der ersten Transformation durch das Ergebnis eines Matrixprodukts aus zwei Matrizen überprüft wird und insbesondere das Überprüfungsergebnis zur Optimierung der ersten Transformation verwendet wird, wobei eine der zwei Matrizen die erste Transformation und die andere Matrix der zwei Matrizen die erste Rücktransformation darstellt.

12. Fotografisches Kopiergerät mit einem Optimierungsapparat nach Anspruch 1 bis 11 und einer mit der Datenausgabeeinrichtung verbundenen Bilderzeugungseinrichtung zum Ausbilden von Bildern auf einem Ausgabemedium, basierend auf den optimierten, ersten Bilddaten.

13. Optimierungsverfahren zum Optimieren fotografischer Bilddaten, insbesondere unter Verwendung des Optimierungsapparats nach Anspruch 1 bis 11 oder des fotografischen Kopiergeräts nach Anspruch 12, das folgende Schritte aufweist:

über eine Dateneingabeeinrichtung werden erste Bilddaten empfangen, die in einem ersten Farbenraum vorliegen und die ein fotografisches Bild, einen Satz fotografischer Bilder oder einen Teil davon darstellen, die empfangenen ersten Bilddaten werden einer Optimierungstransformation unterzogen, um so optimierte erste Bilddaten zu gewinnen, wobei die Optimierungstransformation zumindest eine Kombination aus den folgenden Transformationen umfasst:

eine erste Transformation, die die ersten Bilddaten von dem ersten Farbenraum in einen anderen zweiten Farbenraum transformiert, eine Korrekturtransformation, die die ersten Bilddaten im zweiten Farbenraum korrigiert, und eine zweite Transformation, die die korrigierten ersten Bilddaten in einen dritten Farbenraum transformiert, und

die optimierten ersten Bilddaten, die das fotografische Bild, den Satz fotografischer Bilder oder einen Teil davondarstellen, werden über eine Datenausgabeeinrichtung ausgegeben,

**gekennzeichnet durch** folgende Merkmale:

- über eine andere Dateneingabeeinrichtung werden unabhängig zweite Bilddaten empfangen, die in dem zweiten Farbraum vorliegen, und die das fotographische Bild, den Satz fotographischer Bilder oder einen Teil davon darstellen,
- in Datenumfang der ersten Bilddaten wird so reduziert, dass sich die lokale Auflösung reduziert,
- eine Transformation, die die reduzierten ersten Bilddaten von dem ersten Farbenraum in den zweiten Farbenraum zu den zweiten Bilddaten transformiert, wird unter Verwendung eines Regression- oder Anpassungsverfahren derart bestimmt, dass die Abweichung zwischen den reduzierten ersten Bilddaten nach der Transformation und den zweiten Bilddaten minimiert ist, und die so bestimmte Transformation wird als die erste Transformation bereitgestellt

14. Programm, das, wenn es auf einem Computer läuft oder in einen Computer geladen ist, den Computer veranlasst, das Verfahren nach Anspruch 13 durchzuführen.

15. Computerprogrammprodukt, insbesondere Speichermedium für ein Computerprogramm, das das Programm nach Anspruch 14 aufweist.

**Claims**

1. An apparatus for optimising photographic image data, comprising:

   a data input device for inputting first image data, which are available in a first colour space, and a photographic image, a set of photographic images or a part thereof,
   an optimisation device for optimising the first image data and a data output device for outputting the optimised first image data, which represent the photographic image or the set of photographic images in an optimised manner, where
   the optimisation device performs an optimisation transformation on the first image data, whereby the optimisation transformation corresponds to a combination of at least the following transformations:

   a first transformation, which transforms the first image data from the first colour space into another, second colour space,
   a correction transformation, which corrects the transformed first image data in the second colour space, and
   a second transformation, which transforms the corrected first image data into a third colour space,

   **characterised by** the following features:

   - another data input device, which independently obtains second image data, which are available in the second colour space, of the photographic image, of the set of photographic image data or of a part thereof;
   - a reduction device, which reduces the volume of data of the first image data so that the local resolution is reduced,
   - an analysis and determination device, which determines a transformation which transforms the reduced first image data from the first colour space into the second colour space to the second image data using a regression or adaptation method in such a manner that variations between the reduced first image data after the transformation and the second image data are minimised, with the transformation determined in this manner being the first transformation.

2. An optimisation apparatus according to Claim 1,
   **characterised in that** the correction transformation comprises at least one transformation corresponding to a colour density transformation in the second colour space, where a colour density transformation is designed so that image data which are intended to represent a tonal value is at least brought closer to a colour space axis which describes the colour density in the second colour space.

3. An optimisation apparatus according to Claim 1 or 2,
   **characterised in that** the correction transformation is based on the analysis of second image data, which are available in the second colour space and which differ from the first image data transformed by the first transformation.

4. An optimisation apparatus according to Claim 3,

**characterised in that** the second image data represent an image having a substantially lower local resolution than the first image data.

5. An optimisation apparatus according to Claim 3 or 4,
   **characterised in that** the second image data are obtained at least from a part of the photographic image or the set of photographic images on which the first image data are based.

6. An optimisation apparatus according to Claim 3 to 5,
   **characterised in that** the second image data are obtained from the first image data, where for this purpose the volume of data of the first image data is reduced in lossy manner and a transformation from the first colour space to the second colour space takes place.

7. An optimisation apparatus according to Claim 6,
   **characterised in that** the first transformation is designed as a compensation transformation, which transforms reduced first image data into the second colour space, where the compensation transformation is based on a statistical analysis of reduced first image data which reflect the diversity of the images and/or sets of images inputted via the data input device, and where the compensation transformation at least approximately compensates for a colour change property of the data input device.

8. An optimisation apparatus according to Claim 6,
   **characterised in that** the first image data in the first colour space are changed in accordance with a predetermined assignment instruction, which is based on measured colour value change properties of the data input device, where the change takes place before the performance of a reduction of the first image data and where the changed and reduced image data are transformed by a colour space transformation into the second colour space, where they represent the second image data.

9. An optimisation apparatus according to Claims 1 to 8,
   **characterised in that** the first transformation is determined by means of first and second test image data, where the first test image data are available in the first colour space and the second test image data are available in the second colour space and the first transformation is determined so that after the transformation of the first test image data into the second colour space variations of the transformed first test image data from the non-transformed second test image data are minimised.

10. An optimisation apparatus according to Claim 9,
    **characterised in that** the first test image data and the second test image date are obtained at least from a part of the photographic image or the set of photographic images, which is represented by the first image data, where to determine the second test image data colour values of the photographic image or of the set of photographic images are statistically analysed.

11. An optimisation apparatus according to Claim 9 or 10,
    **characterised in that** a first inverse transformation for transforming the second test image data into the first colour space is determined so that after the inverse transformation of the second test image data into the first colour space variations of the transformed second test image data from the non-transformed first test image data are minimised and that the quality of the first transformation is verified by the result of a matrix product from two matrices and in particular the verification result is used to optimise the first transformation, where one of the two matrices represents the first transformation and the other matrix of the two matrices represents the first inverse transformation.

12. A photographic copying machine having an optimisation apparatus according to Claim 1 to 11 and an image generation device, connected to the data output device, for forming images on an output medium, based on the optimised, first image data.

13. An optimisation method for optimising photographic image data, especially using the optimisation apparatus according to Claims 1 to 11 or the photographic copying machine according to Claim 12, which comprises the following steps:

    first image data, which are available in a first colour space and which represent a photograph image, a set of photographic images or a part thereof, are received via a data input device,
    the received first image data are subjected to an optimisation transformation in order to obtain thus optimised first image data, where
the optimisation transformation comprises at least a combination from the following transformations:

a first transformation, which transforms the first image data from the first colour space into another second colour space,
a correction transformation, which corrects the first image data in the second colour space, and a second transformation, which transforms the corrected first image data into a third colour space, and
the optimised first image data, which represent the photographic image, the set of photographic images or a part thereof, are outputted via a data output device,

**characterised by** the following features:

- second image data, which are available in the second colour space and which represent the photographic image, the set of photographic images or a part thereof, are independently received via another data input device,
- the volume of data of the first image data is reduced so that the local resolution is reduced,
- a transformation, which transforms the reduced first image data from the first colour space into the second colour space to the second image data, is determined using a regression or adaptation method in such a manner that the variation between the reduced first image data after the transformation and the second image data is minimised, and the thus determined transformation is provided as the first transformation.

14. A program, which, when it runs on a computer or is loaded into a computer, prompts the computer to perform the method according to Claim 13.

15. A computer program product, in particular a storage medium for a computer program, which comprises the program according to Claim 14.

### Revendications

1. Appareil d'optimisation pour données d'image photographique
avec un dispositif d'entrée de données pour l'entrée de premières données d'image qui se trouvent dans un premier espace de couleurs et qui représentent une image photographique, un ensemble d'images photographiques ou une partie de ceux-ci,
un dispositif d'optimisation pour l'optimisation des premières données d'image et un dispositif de sortie des données pour la sortie des premières données optimisées qui représentent de façon optimisée l'image photographique ou l'ensemble d'images photographiques,
le dispositif d'optimisation exécutant sur les premières données d'image une transformation d'optimisation, la transformation d'optimisation correspondant à une combinaison d'au moins les transformations suivantes :

une première transformation qui transforme les premières données d'image du premier espace de couleurs dans un autre, deuxième espace de couleur,
une transformation de correction qui corrige les premières données d'image transformées dans le deuxième espace de couleur et
une deuxième transformation qui transforme les premières données d'image corrigées dans un troisième espace de couleur,

**caractérisé par** les caractéristiques suivantes :

- un autre dispositif d'entrée des données qui, indépendamment, obtient des deuxièmes données d'image de l'image photographique, de l'ensemble de données d'image photographiques ou d'une partie de ceux-ci, données d'image qui se trouvent dans le deuxième espace de couleur ;
- un dispositif de réduction qui réduit de volume de données des premières données d'image de telle sorte que la résolution locale se réduit,
- un dispositif d'analyse et de détermination, qui détermine une transformation qui transforme les premières données d'image réduites du premier espace de couleur dans le deuxième espace de couleur en les deuxièmes données d'image par l'utilisation d'un procédé de régression ou d'adaptation, de telle sorte que les écarts entre les premières données d'image réduites après la transformation et les deuxièmes données d'image soient minimisés, la transformation ainsi déterminée étant la première transformation.

**2.** Appareil d'optimisation selon la revendication 1, **caractérisé en ce que** la transformation de correction comprend au moins une transformation correspondant à une transformation de pureté colorimétrique dans le deuxième espace de couleur, une transformation de pureté colorimétrique étant agencée de telle sorte que des données d'image qui doivent représenter une valeur de gris sont au moins approchées d'un axe de couleur qui décrit la pureté colorimétrique dans le deuxième espace de couleur.

**3.** Appareil d'optimisation selon la revendication 1 ou 2, **caractérisé en ce que** la transformation de correction se base sur l'analyse de deux données d'image qui se trouvent dans le deuxième espace de couleur et qui se distinguent des premières données d'image transformées par la première transformation.

**4.** Appareil d'optimisation selon la revendication 3, **caractérisé en ce que** les deuxièmes données d'image représentent une image avec une résolution locale nettement plus faible que les premières données d'image.

**5.** Appareil d'optimisation selon la revendication 3 ou 4, **caractérisé en ce que** les deuxièmes données d'image sont obtenues au moins à partir d'une partie de l'image photographique ou de l'ensemble d'images photographiques sur lesquels se basent les premières données d'image.

**6.** Appareil d'optimisation selon les revendications 3 à 5, **caractérisé en ce que** les deuxièmes données d'image sont obtenues à partir des premières données d'image, le volume de données des premières données d'image étant pour cela réduit avec pertes et une transformation s'effectuant du premier espace de couleur dans le deuxième espace de couleur.

**7.** Appareil d'optimisation selon la revendication 6, **caractérisé en ce que** la première transformation est configurée comme transformation de compensation qui transforme les premières données d'image réduites dans le deuxième espace de couleur, la transformation de compensation se basant sur une analyse statistique de premières données d'image réduites, qui reflète la multitude des images et/ou des ensembles d'images entrés par le dispositif d'entrée des données, et la transformation de compensation compensant au moins approximativement une propriété de changement de valeur de couleur du dispositif d'entrée des données.

**8.** Appareil d'optimisation selon la revendication 6, **caractérisé en ce que** les premières données d'image sont modifiées dans le premier espace de couleur selon une règle d'affectation prédéfinie qui se base sur des propriétés mesurées de changement de valeur de couleur du dispositif d'entrée de données, le changement s'effectuant avant l'exécution d'une réduction des premières données d'image et, les données d'image modifiées et réduites étant transformées par une transformation d'espace de couleur dans le deuxième espace de couleur où elles représentent les deuxièmes données d'image.

**9.** Appareil d'optimisation selon les revendications 1 à 8, **caractérisé en ce que** la première transformation est déterminée au moyen de premières et de deuxièmes données d'images de test, les premières données d'images de test se trouvant dans le premier espace de couleur et les deuxièmes données d'images de test se trouvant dans le deuxième espace de couleur, et la première transformation étant déterminée de telle sorte qu'après la transformation des premières données d'image dans le deuxième espace de couleur, des écarts des premières données d'image de test transformées d'avec les deuxièmes données d'images de test non transformées soient minimisés.

**10.** Appareil d'optimisation selon la revendication 9, **caractérisé en ce que** les premières données d'images de test et les deuxièmes données d'images de test sont obtenues à partir d'au moins une partie de l'image photographique ou de l'ensemble d'images photographiques qui est représentée par les premières données d'image, des valeurs de couleur de l'image photographique ou de l'ensemble d'images photographiques étant analysées statistiquement pour la détermination des deuxièmes données d'images de test.

**11.** Appareil d'optimisation selon la revendication 9 ou 10, **caractérisé en ce qu'**une première transformation en sens inverse pour transformer les deuxièmes données d'image de test dans le premier espace de couleur est déterminée de telle sorte qu'après la transformation en sens inverse des deuxièmes données d'images de test dans le premier espace de couleur, des écarts des deuxièmes données d'images de test transformées d'avec les premières données d'images de test non transformées sont minimisés et **en ce que** la qualité de la première transformation est vérifiée par le résultat d'un produit matriciel de deux matrices et qu'en particulier le résultat de la vérification est utilisé pour l'optimisation de la première transformation, une des deux matrices représentant la première transformation, l'autre matrice des deux matrices représentant la première transformation en sens inverse.

**12.** Appareil de copie photographique avec un appareil d'optimisation selon les revendications 1 à 11 et un dispositif de génération d'image relié au dispositif de sortie des données pour la formation d'images sur un milieu de sortie, se basant sur les premières données d'image optimisées.

**13.** Procédé d'optimisation pour l'optimisation de données d'image photographique, en particulier par l'utilisation de l'appareil d'optimisation selon les revendications 1 à 11 ou de l'appareil de copie photographique selon la revendication 12, qui comporte les étapes suivantes :

des premières données d'image, qui se trouvent dans un premier espace de couleur et qui représentent une image photographique, un ensemble d'images photographiques ou une partie de ceux-ci, sont reçues par l'intermédiaire d'un premier dispositif d'entrée de données,
les premières données d'image reçues sont soumises à une transformation d'optimisation pour obtenir ainsi des premières données d'image optimisées,
la transformation d'optimisation comportant au moins une combinaison des transformations suivantes :

une première transformation qui transforme les premières données d'image du premier espace de couleurs dans un autre, deuxième espace de couleur,
une transformation de correction qui corrige les premières données d'image dans le deuxième espace de couleur et une deuxième transformation qui transforme les premières données d'image corrigées dans un troisième espace de couleur, et
les premières données d'image optimisées qui représentent l'image photographique, l'ensemble d'images photographiques ou une partie de ceux-ci sont sorties par l'intermédiaire d'un dispositif de sortie des données,

**caractérisé par** les caractéristiques suivantes :

- par un autre dispositif d'entrée des données sont reçues indépendamment des deuxièmes données d'image qui se trouvent dans le deuxième espace de couleur, et qui représentent l'image photographique, l'ensemble d'images photographiques ou une partie de ceux-ci,
- un volume de données des premières données d'image est réduit de telle sorte que la résolution locale diminue,
- une transformation qui transforme les données d'image réduites du premier espace de couleur dans le deuxième espace de couleur en les deuxièmes données d'image est déterminée par l'utilisation d'un procédé de régression ou d'adaptation de telle sorte que l'écart entre les premières données d'image réduites après la transformation et les deuxièmes données d'image est minimisé, et la transformation ainsi déterminée est mise à disposition comme la première transformation.

**14.** Programme qui, quand il est exécuté par un ordinateur ou qu'il est chargé sur un ordinateur, incite l'ordinateur à exécuter le procédé selon la revendication 13.

**15.** Produit pour programme d'ordinateur, en particulier support d'enregistrement pour un programme d'ordinateur, qui comporte le programme selon la revendication 14.

Fig. 1

**Fig. 2**

zweiter ⟷ erster
Farbraum | Farbraum

**Fig. 3**

**Fig. 4**

1. Erfasse
Testvektoren

2. Berechne
Gewichte

3. Akkumuliere
Korrelationsmatrix

4. Berechne
K2D' und D2K'

5. Überprüfe
K2D' * D2K'

Wiederhole und ändere Offset

6. Wähle beste Übereinstimmung aus

# Fig. 5